# EUROPEAN PATENT APPLICATION

(11) **EP 1 113 703 A1**
(43) Date of publication of application: **04.07.2001**
(21) Application number: 00944258.3
(22) Date of filing: 05.07.2000
(51) Int. Cl.: H04R 5/02, H04R 1/02, B60R 11/02, H04S 3/00

(54) **SOUND REPRODUCING UNIT**

(30) Priority: 07.07.1999 JP 19276899
(71) Applicant: MATSUSHITA ELECTRIC INDUSTRIAL CO., LTD., Kadoma-shi, Osaka 571-8501 (JP)
(72) Inventor: HASEGAWA, Akinori, Takasago-shi, Hyogo 676-0822 (JP); KONNO, Fumiyasu, Hirakata-shi, Osaka573-0045 (JP)
(74) Representative: Grünecker, August, Dipl.-Ing.
(86) International application number: JP0004461
(87) International publication number: WO0105188

(57) **Abstract**

A sound reproduction apparatus for reproducing multi-channel sound signals into a natural 3-dimensional sound field that can be received by all the passengers sitting at any seats in a room of an automobile. The sound reproduction apparatus comprises speakers (7) - (10) provided in the front and the rear doors at the right and at the left. The speakers disposed in the same side are driven in parallel by a main right and left signals, respectively. As a result, there is no difference in the sound pressure reproduced on the main signals between the front seats and the rear seats. Thus a natural 3-dimensional sound field is provided to all the passengers sitting in any seats in the room.

## Description

### TECHNICAL FIELD

The present invention relates to a sound reproduction apparatus for reproducing multi-channel sound signals in a room of an automobile.

### BACKGROUND ART

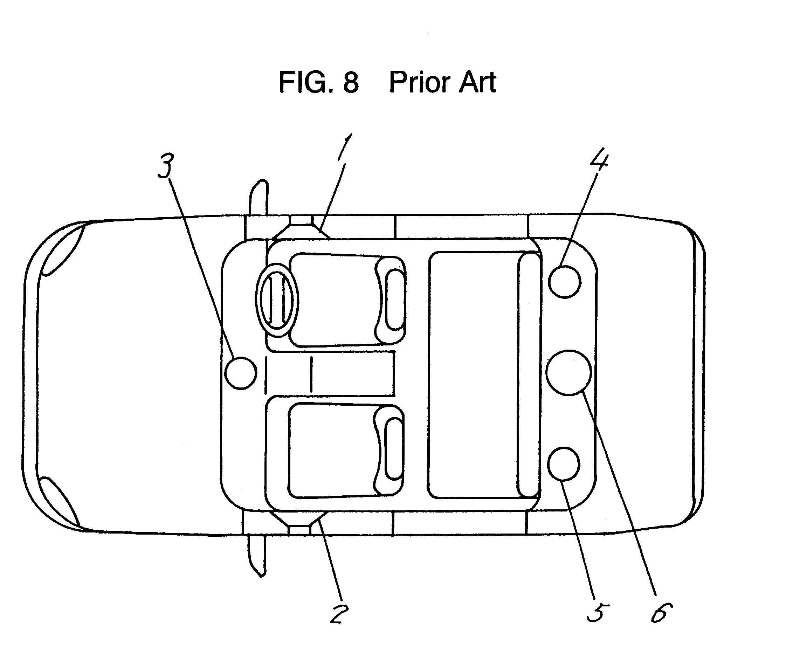

FIG. 8 shows a conventional sound reproduction apparatus for use in an automobile. Speakers 1, 2 are provided respectively in the front right and the front left doors. A center speaker 3 is mounted in the upper surface of front dashboard locating in the front part of a room of the automobile. Rear speakers 4, 5 are provided in the right and the left parts of a rear tray locating in the rear part of the room, and a low frequency range speaker 6 is provided in the middle of the rear tray.

When the multi-channel sound signals are reproduced in the above-configured sound apparatus, the right and the left 2-channel signals, or the main signal, are reproduced through the speakers 1, 2 mounted in front doors; the center signal is reproduced through the center speaker 3; the rear signal is reproduced through the rear speakers 4, 5; and the low frequency sound signal is reproduced through the low range speaker 6.

Since the speakers 1, 2 which reproduce the right and the left 2-channel signals, or the main signal, are located in the front doors in the conventional apparatus, sound pressure of the reproduced right and left 2-channel signals as perceived at the rear seat is lower than that perceived at the front seat. This results in different positioning of the sound image produced by the right and the left 2-channel signals. Due to the above reason, it was difficult to provide all of the passengers sitting at any of the front and rear seats with a natural 3-dimensional sound field rich in perspective feeling, sense of mobility and well fixed sound image in front of every passenger's head.

### DISCLOSURE OF THE INVENTION

A sound reproduction apparatus of the present invention aims to provide a target longed for the multi-channel sound signal reproduction in a room of an automobile. Namely, it aims to provide a natural 3-dimensional sound field that is enjoyable to all of the passengers sitting at any of the seats.

The present sound reproduction apparatus comprises:
speakers provided in the front right and front left doors;
a center speaker provided in the middle of the upper surface of dashboard locating in the front part of an automobile room;
rear speakers provided in the right and left parts of a rear tray locating at the rear place of the room; and
a low range speaker provided in the middle part of the rear tray.

Right and left 2-channel signals are reproduced respectively through the speakers mounted in the front right door and the rear right door driven commonly, and the speakers mounted in the front left door and the rear left door driven commonly. By so doing, difference in the sound pressure reproduced on the right and left 2-channel signals between that received at the front seat and that received at the rear seat can be eliminated, and the sound image reproduced on the right and left 2-channel signals is positioned stable. Thus, a 3-dimensional sound field that can be received by all of the passengers sitting in any of the seats is obtained.

### BRIEF DESCRIPTION OF THE DRAWINGS

FIG. 1 Layout of a sound reproduction apparatus in a first exemplary embodiment of the present invention.

FIG. 2 Block diagram of a sound reproduction apparatus in a second exemplary embodiment of the present invention.

FIG. 3 Block diagram of a sound reproduction apparatus in a third exemplary embodiment of the present invention.

FIG. 4 Layout of a sound reproduction apparatus in a fourth exemplary embodiment of the present invention.

FIG. 5 Cross sectional view of a sound reproduction apparatus in a fifth exemplary embodiment of the present invention.

FIG. 6 Cross sectional view of a sound reproduction apparatus in a sixth exemplary embodiment of the present invention.

FIG. 7 Block diagram of a sound reproduction apparatus in a seventh exemplary embodiment of the present invention.

FIG. 8 Layout of a conventional sound reproduction apparatus.

### BEST MODE FOR CARRYING OUT THE INVENTION

### First Embodiment

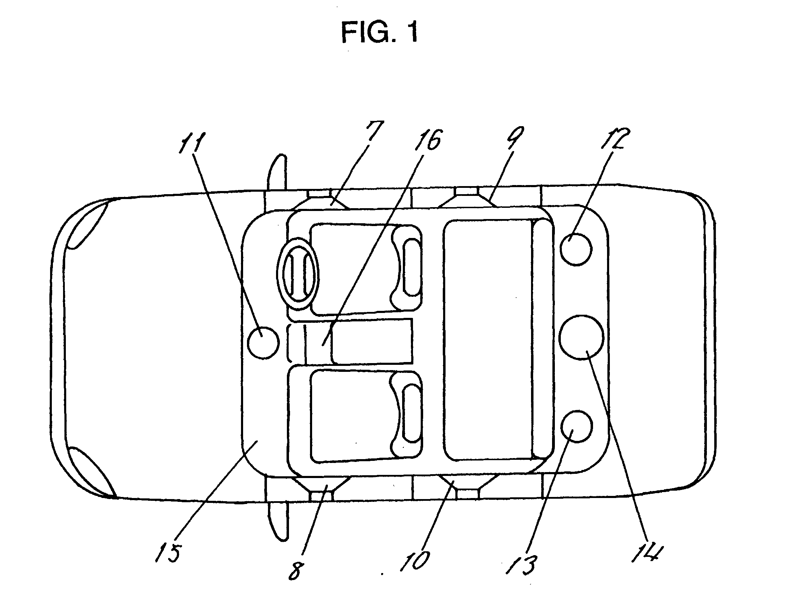

FIG. 1 shows a sound reproduction apparatus in a first exemplary embodiment of the present invention. Speakers 7 - 10 are provided in the front doors and in the rear doors at the right and the left, a center speaker 11 is provided in the middle of the upper surface of dashboard 15 locating in the front part of a room in an automobile. Rear speakers 12, 13 are provided in right and left parts of a rear tray in the room, and a low frequency range speaker 14 is provided in a middle of the rear tray.

When multi-channel sound signals are reproduced in the above-configured present sound reproduction apparatus, the left main signal among the right and left 2-channel signals is reproduced through the speakers 8, 10 mounted in the front left door and in the rear left door respectively, while the right main signal is reproduced through the speakers 7, 9 mounted in the front right door and in the rear right door respectively. By so doing, the sound pressure reproduced becomes identical, either at the front seats or at the rear seats. And the sound image created on the main signal is positioned stable. Thus, a natural 3-dimensional sound field is received at any seats.

Although the rear speakers have been mounted in the rear doors in the present embodiment, these speakers may be provided in equivalent places other than the rear doors for generating the same effects, in a case where the relevant car type is without the rear doors.

### Second Embodiment

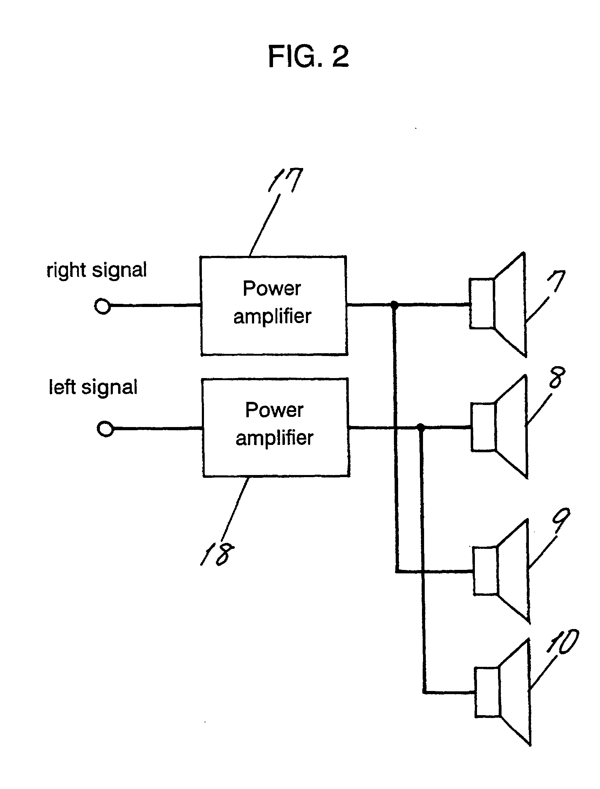

A sound reproduction apparatus in a second exemplary embodiment is described with reference to FIG. 2. The speakers 7 - 10 provided in the front doors and in the rear doors for reproducing the main signal are driven separately in the rights and in the lefts by each of power amplifiers. The right speakers 7, 9 are driven by a power amplifier 17, and the left speakers 8, 10 by a power amplifier 18.

In the above-described configuration, a 3-dimensional sound field can be reproduced without increasing number of the power amplifiers. No increase in the number of power amplifiers means a simple wiring for connections. This eliminates a production cost increase.

### Third Embodiment

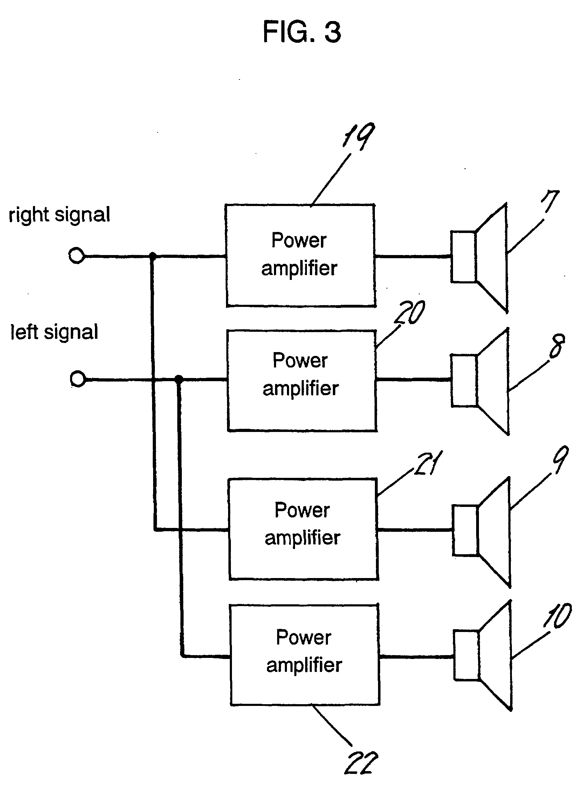

A sound reproduction apparatus in a third exemplary embodiment is described with reference to FIG. 3. The difference from the second exemplary embodiment is that in the present embodiment each of the front and the rear speakers 7 - 10 is provided with a respective power amplifier. The main right and left signals are delivered, respectively, to the power amplifiers coupled with the right speakers in the front door and in the rear door, and to the other power amplifiers coupled with the left speakers in the front door and in the rear door. The right speakers 7, 9 are connected respectively with the power amplifiers 19, 21, to which a sole source of the right signal is supplied, while the left speakers 8, 10 are connected respectively with the power amplifiers 20, 22, to which a sole source of the left signal is supplied.

Under the above structure, the state of reproduction with each of the four speakers 7 - 10 can be adjusted independently by the respective power amplifiers 19 - 22. This contributes to reproducing a 3-dimensional sound field with more natural feeling.

### Fourth Embodiment

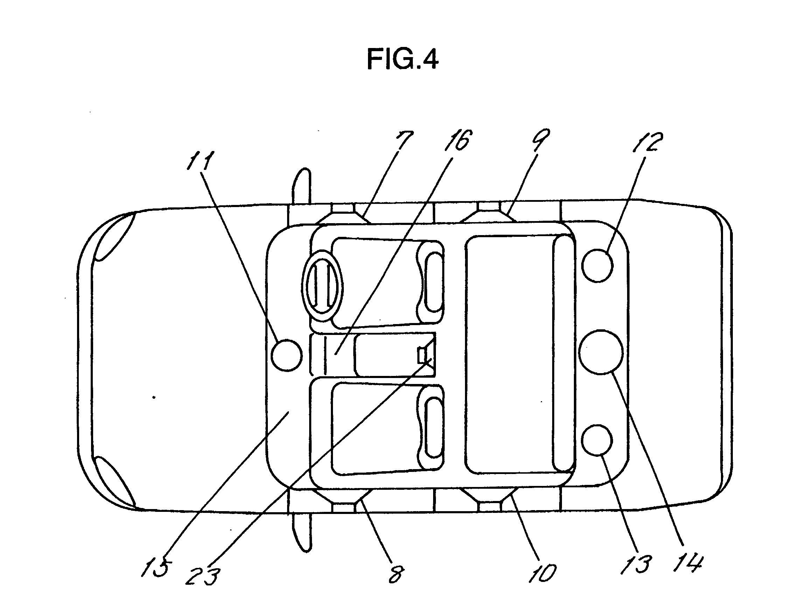

A sound reproduction apparatus in a fourth exemplary embodiment is described with reference to FIG. 4. The difference from the first embodiment is that in the present embodiment there are a center speaker 11 provided in the middle of the upper surface of a dashboard 15 and a center speaker for rear seat 23 mounted facing rear seats in a console box 16, which locating in the central area of the room. The two center speakers 11, 23 are driven by a sole source of the center speaker signal.

Under the above-described arrangement, the sound image at the rear seats is more clearly positioned by the effect of the center speaker for rear seat 23. Thus, a more natural 3-dimensional sound field is presented.

In the present embodiment, the center speaker 11 and the center speaker for rear seat 23 may be driven either in parallel by one unit of power amplifier, or separately by two independent power amplifiers connected to a sole source of the center speaker signal. In either of the arrangements, the same effects are obtained.

### Fifth Embodiment

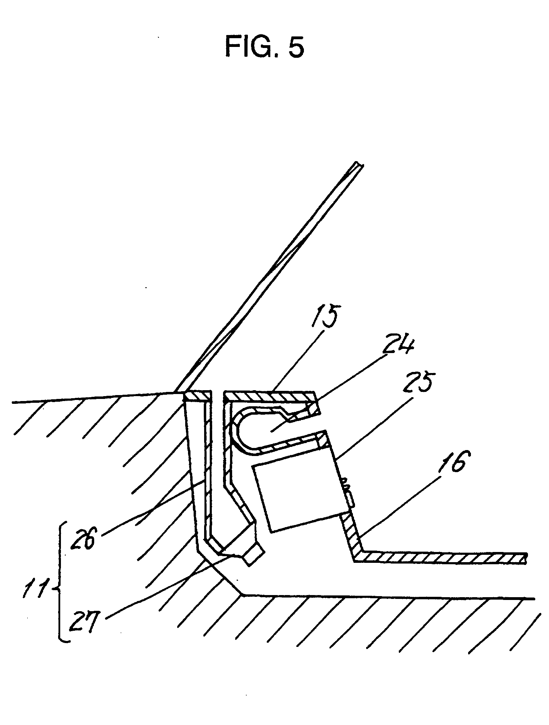

A sound reproduction apparatus in a fifth exemplary embodiment is described with reference to FIG. 5. A center speaker 11 in FIG. 5 comprises a sound tube 26 provided with a slit opening and a speaker 27. The sound tube 26 is disposed within a space surrounded by a dashboard 15 and a console box 16 so that it does not bother an air conditioner duct 24 or a signal reproduction unit 25 and the slit opening faces inside of the room. The sound tube 26 is coupled at one end with a speaker 27, which is installed in a spare space inside the car body equipped with the air conditioner duct 24, the signal reproduction unit 25 or the like.

The above structure enables to provide a center speaker even in a case where there is no space enough for the installation in the upper surface of dashboard 15.

### Sixth Embodiment

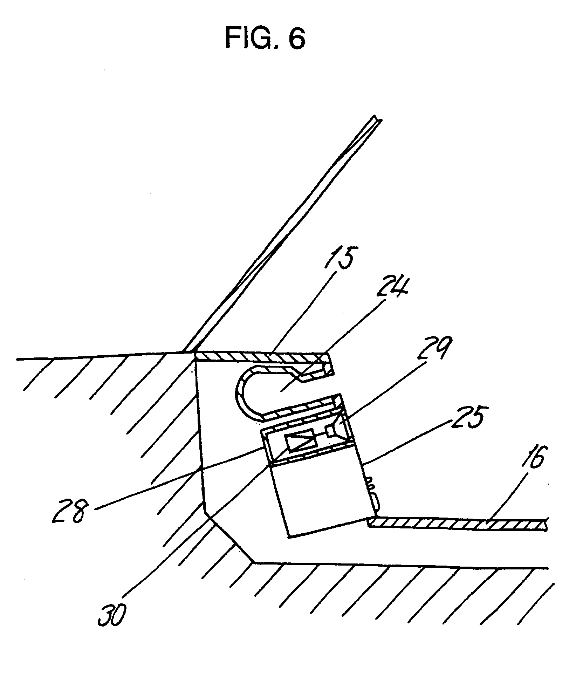

A sound reproduction apparatus in a sixth exemplary embodiment is described with reference to FIG. 6. The difference from the fifth embodiment is that in the present embodiment the center speaker is built in 1DIN size box 28, which contains a power amplifier 30 and a speaker 29 disposed with a diaphragm facing inside of the room. The box is housed in a console box 16.

The above-described configuration realizes the same effects as in embodiment 5. In addition, since the power amplifier 30 and the speaker 29 have already been assembled into 1DIN size box 28, it can be mounted by only a simple wiring work, without requiring any machining work on the car body.

### Seventh Embodiment

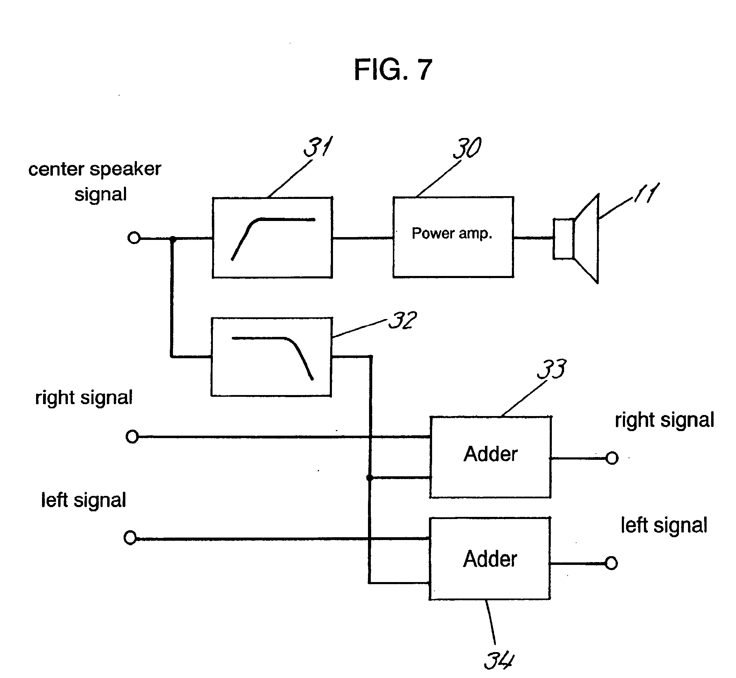

A sound reproduction apparatus in a seventh exemplary embodiment is described with reference to FIG. 7, In the present embodiment, the diameter of center speaker 11 is small, hence it reproduces only the middle and high frequency range signals. Signals for the center speaker are filtered by a high-pass filter 31, only the middle and high range components are delivered to the power amplifier 30 to be reproduced by the center speaker 11. Meanwhile, the middle and low range components are extracted using a low-pass filter out of the signals for center speaker, and the extracted signal components are added on to the right and left signals, the main signals, through respective adders 33 and 34, for reproduction by the speakers mounted in the doors.

Even in a case where a space available for the center speaker 11 is limited to a speaker of small diameter which reproduces only the middle and high frequency range signals, the present embodiment of the above described arrangement provides the same effects as the case where a speaker of large diameter capable of reproducing the middle and low range signals is used for the center speaker 11. That is, in the present embodiment, center speaker signals that can not be reproduced by the center speaker 11 are extracted and delivered to the door speakers disposed in the right and the left to be reproduced as the same signal.

### INDUSTRIAL APPLICABILITY

When multi-channel sound signals are reproduced in a room of an automobile, the above-configured sound reproduction apparatus of the present invention provides a natural 3-dimensional sound field that can be received by all the passengers sitting at any seats in the room of a automobile.

### Reference Numerals

- 1,7: front right door speaker
- 2,8: front left door speaker
- 3,11: center speaker
- 4,12: rear right speaker
- 5,13: rear left speaker
- 6,14: low range speaker
- 15: dashboard
- 16: console box
- 17,18,19,20,21,22,30: power amplifier
- 23: rear seat center speaker
- 24: air condition duct
- 25: signal reproduction apparatus
- 26: sound tube
- 27,29: speaker
- 28: 1DIN size box
- 31: high pass filter
- 32: low pass filter
- 33,34: adder

## Claims

1. A sound reproduction apparatus for reproducing multi-channel sound signals in a room of an automobile comprising:
speakers provided in front right door, front left door, rear right door and rear left door;
a center speaker provided in a middle of an upper surface of a dashboard locating in a front part of the room;
rear speakers provided in right and left parts of a rear tray locating in a rear part of the room; and
a low frequency range speaker provided in a middle of the rear tray, wherein
Right and left 2-channel signals, as main signals of multi-channel sound signal, are reproduced through the door speakers in the front right door and in the rear right door in common, and the door speakers in the front left door and in the rear left door in common, respectively.

2. The sound reproduction apparatus of claim 1, wherein one power amplifier drives the two door speakers in the front door and in the rear doors in parallel, for reproducing respective main signals through the speakers in the front door and in the rear doors in common.

3. The sound reproduction apparatus of claim 1, wherein two power amplifiers are provided each for reproducing the main signal through the two door speakers in the front door and in the rear door in common, said two power amplifiers receiving a common input signal.

4. The sound reproduction apparatus of claim 1, further comprising a second center speaker, the one is provided in the middle of the upper surface of the dashboard locating in the front part of the room and the second one is provided in a console box at a side wall facing rear seats, said two center speakers reproducing a same signal for the center speakers.

5. The sound reproduction apparatus of claim 1, wherein the center speaker is a speaker provided with a sound tube having a slit opening, said speaker installed in a space in the car body surrounded by the dashboard and a console box so that the slit opening of said sound tube faces inside of the room.

6. The sound reproduction apparatus of claim 1, wherein a speaker box of 1DIN size is used for the center speaker, said speaker box mounted in a console box within the room so that a diaphragm of the speaker faces inside of the room.

7. The sound reproduction apparatus of claim 1, wherein a signal for center speaker is divided into middle-low range frequency signal and middle-high range frequency signal, the middle-high range frequency signal being reproduced by the center speaker, and the middle-low frequency range signal being added on to the main right and left 2-channel signals to be reproduced through the respective door speakers provided in the front doors and in the rear doors.
